# EUROPÄISCHE PATENTSCHRIFT

(11) **EP 1 199 335 B1**
(45) Veröffentlichungstag und Bekanntmachung des Hinweises auf die Patenterteilung: **22.12.2010**
(21) Anmeldenummer: 00122954.1
(22) Anmeldetag: 21.10.2000
(51) Int. Cl.: C09C 1/30, C09C 3/12, C09D 7/12, C09D 175/04, C08K 9/06

(54) **Funktionalisierte Kieselsäuren**
Functionalized silicic acids
Silice fonctionalisée

(43) Veröffentlichungstag der Anmeldung: 24.04.2002
(73) Patentinhaber: Evonik Degussa GmbH, 45128 Essen (DE)
(72) Erfinder: Meyer, Jürgen, Dr., 63811 Stockstadt (DE); Ettlinger, Manfred, Dr., 63791 Karlstein (DE); Frahn, Stephanie, Dr., 63808 Haibach (DE); Kerner, Dieter, Dr., 63450 Hanau (DE)

(56) Entgegenhaltungen:
- EP-A- 0 466 958
- EP-A- 0 808 880
- EP-A- 0 896 029
- WO-A-90/02779
- DE-A- 19 511 627
- DATABASE CHEMABS [Online] CHEMICAL ABSTRACTS SERVICE, COLUMBUS, OHIO, US; MATSUMURA, KAZUYUKI ET AL: "Surface treatment of silica" retrieved from STN Database accession no. 123:289764 XP002165082 & JP 07 126549 A (SHINETSU CHEM IND CO, JAPAN) 16. Mai 1995 (1995-05-16)
- L.N. LEWIS, D. KATSAMBERIS: "UV-curable abrasion-resistant and weatherable coatings with improved adhesion" J. APPL. POLYM. SCI., Bd. 42, Nr. 6, 1991, Seiten 1551-1556, XP002165547

## Beschreibung

Die Erfindung betrifft die Verwendung von runktionalisierten Kieselsäuren, in Lacken.

Es ist bekannt, flammenhydrolytisch gewonnenes Siliziumdioxid mit einer Oberfläche von 40 bis 200 m²/g mit 3-Methacryloxypropyltrimethoxysilan umzusetzen. Das erhaltene Siliziumdioxid wird anschließend mit einer weiteren Hülle aus (Meth)acrylatpolymeren beschichtet und anschließend in Dentalmassen eingesetzt (EP 0 142 784 A1).

Es ist bekannt, pyrogene Kieselsäure mit Glycidoxypropyltrimethoxysilan und Methacryloxypropyltrimethoxysilan in Gegenwart von isoPropanol zu behandeln (EP 0 896 029).

Es ist bekannt, pyrogen hergestellte Kieselsäure mit Hexamethyldisilazan zu behandeln (EP 0 808 880).

Es ist bekannt, Siliciumdioxid in Gegenwart von Fluorverbindungen mit Glycidoxypropyltrimethoxysilan oder Methacryloxypropyltrimethoxysilan zu behandeln (JP 71 26 549 A).

Gegenstand der Erfindung ist die Verwendung von funktionalisierten Kieselsäuren, gekennzeichnet durch auf der Oberfläche fixierte funktionelle Gruppen, wobei die Gruppen 3-Methacryloxypropylsilyl und/oder Glycidyloxypropylsilyl sind, erhältlich dadurch, dass man eine Kieselsäure in einem geeigneten Mischgefäß unter intensivem Mischen, gegebenenfalls zunächst mit Wasser oder verdünnter Säure und anschließend mit einen Oberflächenmodifizierungsreagens oder einen Gemisch aus mehreren Oberflächenmodifizierungsreagentien besprüht, gegebenenfalls 15 bis 30 Minuten nachmischt und bei einer Temperatur von 100 bis 400 °C über einen Zeitraum von 1 bis 6 h tempert, in Lacken.

Als Kieselsäure kann bevorzugt eine pyrogen auf dem Wege der Flammenhydrolyse von SiCl₄ hergestellte Kieselsäure eingesetzt werden. Derartige pyrogene Kieselsäuren sind bekannt aus Ullmanns Enzyklopädie der technischen Chemie, 4. Auflage, Band 21, Seite 464 (1982).

In einer bevorzugten Ausführungsform der Erfindung kann eine pyrogene Kieselsäure mit einer Oberfläche von ca. 200 m²/g eingesetzt werden (Aerosil 200).

Als Oberflächenmodifizierungsreagens kann man monomere Substanzen wie 3-Methacryloxypropyltrialkoxysilan und/oder Glycidyloxypropyltrialkoxysilan einsetzen, wobei Alkoxy gleich Methoxy-, Ethoxy- und/oder Propoxy - sein kann.

Die Menge an Silan kann in Bezug auf die Kieselsäure so dosiert werden, dass kein oder nur ein kleiner Überschuss entsteht. Gegebenenfalls kann der Überschuss an Silan bei der Temperung wieder entfernt werden.

Die erfindungsgemäße Kieselsäure kann in lösemittelhaltigen Lacken, zum Beispiel 2-Komponenten-Polyurethan-Lacken, eingesetzt werden.

Die erfindungsgemäßen funktionalisierten Kieselsäuren weisen den folgenden Vorteil auf:

Bei der Verwendung in lösemittelhaltigen Lacken, wie zum Beispiel 2-Komponenten-Polyurethan-Lacken, wird die Kratzfestigkeit der Lackoberfläche erhöht.

Erfindungsgemäß können als Kieselsäure zur Silanisierung die pyrogen hergestellten Kieselsäuren gemäß Tabelle 1 eingesetzt werden.

**Tabelle 1**

| Physikalisch Chemische Daten von AEROSIL | | | | | | | | | |
|---|---|---|---|---|---|---|---|---|---|
| Prüfmethode | | AEROSIL 90 | AEROSIL 130 | AEROSIL 150 | AEROSIL 200 | AEROSIL 300 | AEROSIL 380 | AEROSIL OX 50 | AEROSIL TT 600 |
| Verhalten gegenüber Wasser | | | | | | | hydrophil | | |
| Aussehen | | | | | | | lockeres weißes Pulver | | |
| Oberfläche nach BET¹⁾ | m²/g | 90±15 | 130±25 | 150±15 | 200±25 | 300±30 | 380±30 | 50±15 | 200±50 |
| Mittlere Größe der Primärteilchen | nm | 20 | 16 | 14 | 12 | 7 | 7 | 40 | 40 |
| Stampfdichte ca.-Wert²⁾ verdichtet Warte (Zusatz "V") VV-Ware (Zusatz "VV")¹²⁾ | g/l | 80 | 50 | 50 | 50 | 50 | 50 | 130 | 60 |
| | g/l | 120 | 120 | 120 | 120 | 120 | 120 | | |
| | g/l | | | 50/75 | 50/75 | 50/75 | | | |
| | g/l | | | | 120 | 120 | | | |
| Trocknungsverlust³⁾ (2 Stunden bei 105 °C) bei Verlassen d. Lieferwerkes | % | <1,0 | 4, 5 | <0,5⁹⁾ | <1,5 | <1,5 | <2,0 | <1,5 | <2,5 |
| Glühverlust^{4) 7)} (2 Stunden bei 1000°C) | % | <1 | <1 | <1 | <1 | <2 | <2,5 | <1 | <2,5 |
| pH-Wert⁵⁾ | | 3,7-4.7 | 3,7-4,7 | 3.7-4,7 | 3,7-4,7 | 3,7-4,7 | 3,7-4,7 | 3,8-4,8 | 3,6-4,5 |
| SiO₂⁸⁾ | % | >99,8 | >99,8 | >99,8 | >99,8 | >99,8 | >99,8 | >99,8 | >99,8 |
| Al₂O₃⁸⁾ | % | <0,05 | <0,05 | <0,05 | <0,05 | <0,05 | <0.05 | <0,08 | <0,05 |
| Fc₂O₃⁸⁾ | % | <0,003 | <0,003 | <0,003 | <0,003 | <0,003 | <0,003 | <0,01 | <0,003 |
| TiO₂⁸⁾ | % | <0,03 | <0,03 | <0,03 | <0,03 | <0,03 | <0,03 | <0,03 | <0,03 |
| HCl^{8) 10)} | % | <0,025 | <0,025 | <0,025 | <0,025 | <0,025 | <0,025 | <0,025 | <0,025 |
| Siebrückstand⁸⁾ (nach Mocker, 45 µm) | % | <0,05 | <0,05 | <0,05 | <0,05 | <0,05 | <0,05 | <0,2 | <0,05 |
| Gebindegröße (netto)¹¹⁾ | kg | 10 | 10 | 10 | 10 | 10 | 10 | 10 | 10 |
| 1) in Anlehnung an DIN 66131 | | | | | 7) bezogen auf die 2 Stunden bei 105 °C getrocknete Substanz | | | | |
| 2) in Anlehnung an DIN ISO 787/XI, JIS K 5101/18 (nicht gesiebt) | | | | | 8) bezogen auf die 2 Stunden bei 1000 °C geglukte Substanz | | | | |
| 3) in Anlehnung an DIN ISO 787/II, ASTM D 280. JIS K 5101/21 | | | | | 9) spezielle vor Feuchtigkeit schützende Verpackung | | | | |
| 4) in Anlehnung an DIN 55921, ASTM D 1208, JIS K 5101/23 | | | | | 10) HCI-Gehalt is Bestandteil des Glühverlustes | | | | |
| 5) in Anlehnung an DIN ISO 787/IX, ASTM D 1208, JIS K 5101/24 | | | | | 11) V-Ware wird in Säcken zu 20 kg geliefert | | | | |
| 6) in Anlehnung an DIN ISO 787/XVIII, JIS K 5101/20 | | | | | 12) VV-Ware wird zur Zeit ausschließlich vom Werk Rheinfolden geliefert | | | | |

### Beispiel 1:

AEROSIL 200 wird mit 4 Teilen Wasser und 18 Teilen 3-Methacryloxypropyl-trimethoxysilan (zum Beispiel DYNASILAN MEMO) gemischt und bei 140 °C unter Schutzgas getempert. Die erhaltene Kieselsäure hat folgende Eigenschaften:

| | |
|---|---|
| BET [m²/g] | 138 |
| Stampfdichte [g/l] | 52 |
| pH-Wert | 4,6 |
| C-Gehalt | 5,7 |
| Trocknungsverlust [%] | 0,8 |
| Glühverlust [%] | 9,7 |
| DBP-Zahl [%] | 228 |

### Beispiel 2:

AEROSIL 200 wird mit 3 Teilen Wasser und 16 Teilen 3-Glycidyloxypropyl-trimethoxysilan (zum Beispiel DYNASILAN GLYMO) gemischt und bei 140 °C unter Schutzgas getempert. Die erhaltene Kieselsäure hat folgende Eigenschaften:

| | |
|---|---|
| BET [m²/g] | 165 |
| Stampfdichte [g/l] | 53 |
| pH-Wert | 4,9 |
| C-Gehalt | 5,5 |
| Trocknungsverlust [%] | 1,5 |
| Glühverlust [%] | 8,7 |
| DBP-Zahl [%] | 242 |

### Versuch 1:

Für die Untersuchung der Verbesserung der Kratzfestigkeit ist ein konventioneller 2-Komponenten-Polyurethan-Lack verwendet worden. Die Rezeptur für den Lack sowie die Herstellung einschließlich der Applikation sind im Folgenden zusammengefasst:

### Rezeptur:

| | | **Gew. Teile** |
|---|---|---|
| **Reibgut** | Setalux C 1152, XX - 51,50 %ig (Akzo Nobel) | 53,3 |
| | Butylacetat 98 %ig | 6,7 |
| | Xylol | 6,7 |
| | AEROSIL (Kieselsäure gemäss Beispiel 1) | 5,0 |
| Σ | | **71,7** |
| **Auflackung:** | Setalux C 1152, XX - 51,50 %ig (Akzo Nobel) | 1,1 |
| | Xylol | 12,2 |
| | Ethoxypropylacetat | 1,5 |
| | Butylglykolacetat | 1,5 |
| **Härter:** | Desmodur N 75 (Bayer) | 17,0 |
| Σ | | **105,0** |

Bindemittelkonzentration: 40 %

AEROSIL berechnet auf Reibgut (FK): 18,8 % AEROSIL berechnet auf Lack (Gesamt): 5 %
AEROSIL berechnet auf Lack (FK): 12,5 %

### Herstellung und Applikation der Lacke

Das Setalux wird mit den Lösemitteln vermischt. Anschließend wird zur Vordispergierung das AEROSIL mit dem Dissolver (Scheibe ∅ 45 mm) in dieses Gemisch eingearbeitet und 5 min bei 2000 Upm vordispergiert. Die Mischung wird in einer Labor-Perlmühle 30 min bei 2500 Upm und 60 % Pumpleistung unter Verwendung von Glasperlen (0 ca. 1 mm) dispergiert. Die Dispergiergüte wird mit einem Grindometer, 25 µm, nach DIN ISO 1524 überprüft. Er muss kleiner 10 µm sein.

Die Auflackung des Reibgutes erfolgt gemäß der Rezeptur, wobei die Komponenten mit einem Flügelrührer bei 2000 Upm vermischt werden. Auf die gleiche Weise wird der Härter untergerührt.

Nach Einstellung der Lacke auf Spritzviskosität nach DIN 53411 werden die Lacke mittels Spritzapplikation auf schwarz lackierte Bleche, zum Beispiel DT 36 (Fa. Q-Panel), appliziert (Schichtdicke etwa 40-50 µm), Nach dem Spritzen werden die Bleche 24 h bei Raumtemperatur und anschließend 2 h in einem Trockenofen bei 70 °C getrocknet.

### Kratzversuche:

Mit Hilfe einer Scheuer- und
Waschbeständigkeitsprüfmaschine (Fa. Erichsen, Bürste mit Schweineborsten) werden die Bleche mit einer Quarz/Wasser Aufschlämmung (100 g Wasser + 1 g Marlon A 350, 0,25 %ig + 5 g Millicarb BG) gescheuert. Der Glanz vor und 10 min nach dem Scheuern wird mit einem Reflektometer (20 ° Einstrahlwinkel) bestimmt.

**Tabelle 2**

| Zusammenfassung der lacktechnisch relevanten Eigenschaften der flüssigen Lacke sowie der applizierten und getrockneten Filme: | | | | |
|---|---|---|---|---|
| | | **AEROSIL 200** | **Kieselsäure/ (Beispiel 1)** | **Referenz** |
| **Grindometerwert** | **[µm]** | <10 | <10 | - |
| **Viskosität (Reibgut)** | **[mPas]** | | 1000 | 180 |
| | **6 upm** | | | |
| | **60 upm** | | | |
| | | 534 | | |
| | | 464 | 600 | 143 |
| **Viskosität** | | | | |
| **(Lack + Härter)** | **[mPas]** | | | |
| | **6 Upm** | | | |
| | **60 Upm** | | | |
| | | 166 | 180 | 75 |
| | | 141 | 147 | 62 |
| **Verdünnung (Einstellung auf 20 s DIN 4 mm)** | **[%]** | 11,5 | 8.5 | 1,7 |
| **Kratzfestigkeit** | | | | |
| **20 °-Reflektometerwert vor Kratzen** | | 90,9 | 87,6 | 91,3 |
| **40 Hübe mit Sikron F 500** | | 66,4 | 73,0 | 50,7 |
| **20 °-Reflektometerwent** | | 73,0 | 83,3 | 55,5 |
| **Restglanz** | **[%]** | | | |
| **100 Hübe mit Millicarb BG** | | 79,2 | 80,5 | 68,4 |
| **20 °-Reflektometerwert** | | 87,1 | 91,9 | 74,9 |
| **Restglanz** | **[%]** | | | |

## Patentansprüche

1. Verwendung von funktionalisierten Kieselsäuren,
**gekennzeichnet durch** auf der Oberfläche fixierte funktionelle Gruppen, wobei die Gruppen 3-Methacryloxypropylsilyl und/oder Glycidyloxylropylsilyl sind, erhältlich **dadurch**, dass man eine Kieselsäure in einem geeigneten Mischgefäß unter intensivem Mischen, gegebenenfalls zunächst mit Wasser oder verdünnter Säure und anschliessend mit einem Oberflächenmodifizierungsreagens oder einem Gemisch aus mehreren Oberflächenmodifizierungsreagentien besprüht, gegebenenfalls 15 bis 30 Minuten nachmischt und bei einer Temperatur von 100 bis 400 °C über einen Zeitraum von 1 bis 6 h tempert, in Lacken.

## Claims

1. Use of functionalized silicas, **characterized by** functional groups fixed on the surface, the groups being 3-methacryloyloxypropylsilyl and/or glycidyloxypropylsilyl, obtainable by spraying a silica, in a suitable mixing vessel with vigorous stirring, optionally first with water or dilute acid and then with a surface modification reagent or a mixture of two or more surface modification reagents, optionally mixing for a further 15 to 30 minutes and heating at a temperature of 100 to 400°C over a period of 1 to 6 h, in coating materials.

## Revendications

1. Utilisation d'acides siliciques fonctionnalisés, **caractérisés par** des groupes fonctionnels fixés sur la surface, les groupes étant le groupe 3-méthacryloxypropylsilyle et/ou le groupe glycidyloxypropylsilyle, pouvant être obtenus en pulvérisant éventuellement d'abord de l'eau ou un acide dilué et ensuite un réactif de modification de surface ou un mélange de plusieurs réactifs de modification de surface sur un acide silicique dans un récipient de mélange approprié, en mélangeant intensément, éventuellement en poursuivant le mélangeage pendant 15 à 30 minutes et en soumettant le mélange à une température de 100 à 400 °C pendant une durée de 1 à 6 heures, dans des peintures.
